# EUROPÄISCHE PATENTSCHRIFT

(11) **EP 3 693 692 B1**
(45) Veröffentlichungstag und Bekanntmachung des Hinweises auf die Patenterteilung: **25.10.2023**
(21) Anmeldenummer: 20154854.2
(22) Anmeldetag: 31.01.2020
(51) Int. Cl.: F41H 7/04, B60P 1/00, B60P 1/64, B60P 7/08, B60R 9/055, B60R 9/058, F41H 7/02

(54) **MODULARE PLATTFORM**
MODULAR PLATFORM
PLATEFORME MODULAIRE

(30) Priorität: 05.02.2019 DE 102019102818
(43) Veröffentlichungstag der Anmeldung: 12.08.2020
(73) Patentinhaber: Rheinmetall Landsysteme GmbH, 29345 Unterlüß (DE)
(72) Erfinder: WITT, Tino, 29345 Unterlüß (DE); RATHJEN, Klaus Philipp, 29345 Unterlüß (DE)
(74) Vertreter: Horn Kleimann Waitzhofer Patentanwälte PartG mbB

(56) Entgegenhaltungen:
- WO-A1-2010/148011
- WO-A1-2017/004724
- DD-A1- 28 989
- KR-A- 20110 047 393
- US-A1- 2008 264 989
- US-A1- 2017 021 690
- Ulrich Wrede: "Ulrich's Referenzbilder - Brückenlegepanzer Biber", , 17. September 2012 (2012-09-17), XP055707376, Gefunden im Internet: URL:https://www.ulrichwrede.de/rundgang-um -fahrzeuge/leopard-1-familie/brückenlegepa nzer-biber/ [gefunden am 2020-06-22]

## Beschreibung

Die vorliegende Erfindung betrifft eine modulare Plattform zur Befestigung auf oder an einem Fahrzeug. Entsprechende modulare Plattformen werden dazu benötigt, um Ausrüstung und/oder Zubehör für Fahrzeuge bzw. Fahrzeugkomponenten an diesen zu befestigen, damit die Fahrzeugkomponenten auf Fahrzeugen transportiert werden können. Fahrzeugkomponenten, die auf der Plattform transportiert werden können und somit auf dieser befestigt werden können, sind beispielsweise Ersatzteile für Fahrzeuge wie Ersatztriebwerke, Aggregate, Ketten, Räder, Batterien, Treibstoffbehälter bis hin zu Gefechtsstationen oder Teilen davon.

Bekannt ist hierzu, dass diese modularen Plattformen mit Befestigungsmitteln auf oder an Fahrzeugen befestigt werden. Diese Befestigungsmittel sind üblicherweise Verschraubungen oder gesicherte Bolzen.

Entsprechende modulare Plattformen sind beispielsweise aus der DE 10 2009 019 866 A1 bekannt. Diese Druckschrift offenbart eine modulare Plattform bzw. Ausrüstungsträger, welcher modular aufgebaut ist und mit Schrauben und Spannstiften auf dem Fahrzeug befestigt wird.

Auch bekannt ist eine modulare Verlegebrücke, die Teil des Brückenlegepanzers Biber darstellt.

Unter modularer Plattform soll im Weiteren eine frei konfigurierbare Plattform bedeuten, mit austauschbaren Elementen der Plattform.

Eine solche modulare Plattform soll jedoch möglichst schnell montierbar und demontierbar sein. Durch immer mehr Aufbauten am Fahrzeug werden jedoch die Befestigungsmittel immer schwerer zugänglich und das Abnehmen oder Aufsetzen der Plattform erfordert dadurch mehr Zeit.

Somit ist es Aufgabe der vorliegenden Erfindung, eine modulare Plattform bereitzustellen, welche möglichst schnell an einem Fahrzeug oder auf einem Fahrzeug montiert und wieder demontiert werden kann. Diese Aufgabe wird durch die Merkmale des vorliegenden Hauptanspruchs gelöst.

So beansprucht der vorliegende Hauptanspruch eine modulare Plattform zur Aufnahme von Fahrzeugkomponenten. Die modulare Plattform weist Befestigungsmittel zur Befestigung der Plattform auf oder an einem Fahrzeug auf. Durch diese Befestigungsmittel kann die modulare Plattform waagerecht auf einem Fahrzeug angebracht werden. Es ist aber auch möglich, an anderen Stellen des Fahrzeugs die modulare Plattform anzuordnen und diese somit nicht waagerecht zu lagern, beispielsweise senkrecht an der Seitenwand des Fahrzeugs. Erfindungsgemäß besitzt die modulare Plattform Befestigungsmittel, wobei mindestens zwei der Befestigungsmittel als Schnellarretierung ausgeführt sind. Eine Schnellarretierung im vorliegenden Fall soll bedeuten, dass die Schnellarretierung als Befestigungsmittel dienen kann und somit die modulare Plattform an oder auf dem Fahrzeug befestigen kann, wobei diese Befestigung möglichst schnell von statten gehen soll, mindestens jedoch schneller als über die herkömmlich bekannten Befestigungsmethoden. Eine entsprechende Demontage soll ebenfalls möglichst unkompliziert und schnell geschehen können.

Erfindungsgemäß wird als Schnellarretierung ein Haken vorgeschlagen, welcher einen U-förmigen Innenbereich aufweist und eine Sperrklinke umfasst. Der U-förmige Innenbereich dient zur Aufnahme eines zylinderförmigen Körpers, beispielsweise eines Bolzens oder einer Stange. Durch den U-förmigen Innenbereich und die Ausgestaltung des Hakens ist gewährleistet, dass die darin einbringbare Stange oder der darin einbringbare Bolzen sich nur in eine Richtung bewegen kann, nämlich in Richtung der Öffnung des Innenbereichs.

Durch diese Ausführung kann die Plattform durch einfaches Auflegen auf dafür vorgesehenen Befestigungspunkten mit den Befestigungsmitteln an dem Fahrzeug oder auf dem Fahrzeug angebracht werden. Bei einer waagerechten Lagerung wird dabei allein durch die Schwerkraft der modularen Plattform diese in ihre Arretierposition überführt, also in den Innenbereich der Schnellarretierung eingebracht.

Eine bei der Schnellarretierung enthaltene Sperrklinke sorgt dafür, dass keine unabsichtliche Demontage nach Anbringung der Plattform auf oder an einem Fahrzeug geschieht. Dazu ist bevorzugt die Sperrklinke drehgelagert, und zwar so, dass die Sperrklinke teilweise in den Innenbereich des Hakens hineinragen kann. Dazu ist die schnelle Arretierung so gestaltet, dass in der Arretierposition die Klinke in den Innenbereich hineinragt. Hierzu kann beispielsweise die Sperrklinke federbelastet sein, sodass die Feder die Sperrklinke in den Innenbereich hineinragen lässt.

Bevorzugt ist die Sperrklinke länglich, beispielsweise rechteckig, gestaltet und derart drehgelagert, dass bei Hineinragen in den Innenbereich die Sperrklinke von der U-förmigen Öffnung wegzeigt. Dadurch ist ein einfaches Überwinden der Sperrklinke bei Montage der Plattform gewährleistet.

Bei Montage der modularen Plattform durch die Befestigungsmittel auf oder an dem Fahrzeug wird dabei mittels der Schwerkraft der Plattform bei der Bewegung der zylinderförmigen Körper in den Innenbereich der Schnellarretierung hinein die Federkraft der Sperrklinke überwunden und somit die Sperrklinke aus dem Innenbereich des Hakens herausbewegt.

Die Sperrklinke ist außerhalb des Radius des zylinderförmigen Körpers im Haken in Arretierposition angeordnet. Dadurch kann die Sperrklinke nach der Montage wieder in den Innenbereich der Schnellarretierung hineinragen. In diesem Zustand sperrt die Sperrklinke die Bewegung des zylinderförmigen Körpers in der Schnellarretierung. Die modulare Plattform ist somit arretiert.

Erfindungsgemäß werden mindestens zwei Befestigungsmittel als Schnellarretierungen ausgeführt. Es ist ebenfalls möglich, alle Befestigungen als Schnellarretierung auszuführen. Bevorzugt ist jedoch angedacht, dass schwer zugängliche Befestigungsmittel als einfache Auflagen ausgeführt sind. Es ist nicht notwendig, dass alle Befestigungsmittel als Schnellarretierung ausgeführt sind. Je nach Anwendungsfall können mindestens zwei, jedoch auch mehr Befestigungsmittel als Schnellarretierung ausgeführt sein. Die übrigen Befestigungsmittel sind dann als Auflage ausgeführt.

Wie bereits beschrieben, wird die modulare Plattform somit automatisch beim Aufsetzen der Plattform auf dem Fahrzeug arretiert, und zwar durch die Schwerkraft der Plattform. Hierbei wird die in den Innenbereich hineinragende Sperrklinke der Schnellarretierung überwunden und nach der Montage durch die Sperrklinke verriegelt.

Die vorgenannte Federbelastung der Sperrklinke kann durch andere Spannelemente ersetzt werden. So kann die teilweise Überführung der Sperrklinke in den Innenbereich der Schnellarretierung auch hydraulisch, pneumatisch oder elektrisch geschehen.

Zur schnellen Demontage müssen dann lediglich die in den Schnellarretierungen aufgenommenen zylinderförmigen Körper aus diesen wieder entfernt werden. Dazu ist es nur notwendig, die Sperrklinke aus dem Innenbereich der Schnellarretierung heraus zu bewegen, um die Bewegungsfreiheit aus dem U-förmigen Innenbereich heraus zu ermöglichen. Die modulare Plattform kann dann einfach entgegen der Montagerichtung vom Fahrzeug wegbewegt werden.

In einer bevorzugten Ausführungsform besitzt die Schnellarretierung dazu eine Sperrbetätigung, um die Sperrklinke aus dem Innenbereich heraus zu bewegen. Eine solche Sperrbetätigung kann aus einem einfachen Hebel bestehen, welcher betätigt wird, um der Kraft der Spannelemente entgegenzuwirken und die Sperrklinke aus dem Innenbereich der Schnellarretierung heraus zu bewegen.

Die vorgenannte Sperrbetätigung kann aber ebenfalls auch hydraulisch, elektrisch oder pneumatisch ausgeführt sein, um kraftunterstützend bei der Bewegung der Sperrklinke zu wirken.

In einer speziellen Ausführungsform wird vorgeschlagen, dass alle an der modularen Plattform befindlichen Schnellarretierungen durch eine gemeinsame Entriegelung derart betätigt werden können, dass dadurch die Sperrklinken aller Schnellarretierungen aus den Innenbereichen heraus bewegt werden können.

Dazu wird vorgeschlagen, dass die Plattform eine Steuerung umfasst, welche die Betätigung aller Sperrbetätigungen der Schnellarretierungen ausführen kann. Diese Steuerung kann ebenfalls elektrisch, pneumatisch oder hydraulisch ausgeführt sein und umfasst dann eine gemeinsame, zentrale Entriegelung an der Plattform. Nach Betätigung der Entriegelung wird durch die elektrische, pneumatische oder hydraulische Verbindung der Entriegelung mit der Steuerung veranlasst, dass die Sperrbetätigungen der Schnellarretierungen betätigt werden. Dazu sind auch die Sperrbetätigungen mit der Steuerung elektrisch, pneumatisch oder hydraulisch verbunden.

Im Falle einer hydraulischen Steuerung wird vorgeschlagen, dass diese eine Pumpe und einen Behälter für Hydraulikflüssigkeit beinhaltet, um eine schnelle Wartung zu gewährleisten. Durch den Behälter für Hydraulikflüssigkeit ist ein einfaches Kontrollieren und Nachfüllen der erforderlichen Hydraulikflüssigkeit möglich und die Pumpe sorgt für den benötigten Hydraulikdruck im hydraulischen System.

Weiterhin wird bevorzugt vorgeschlagen, dass die Steuerung ein Ventil beinhaltet, zum Entlasten der Steuerung. Bei einer möglichen Fehlfunktion der Entriegelung oder des hydraulischen Systems wird durch das Ventil dafür gesorgt, dass eine Notentriegelung möglich ist. Hierzu wird das Ventil geöffnet und somit das unter einer Kraft stehende System entlastet. Bei hydraulischen Systemen wird dafür gesorgt, dass der hydraulische Druck abgebaut wird. Bei pneumatischen Systemen wird der Luftdruck abgebaut. Bei elektrischen Systemen ist unter dem Ventil die Unterbrechung des elektrischen Kreises zu verstehen.

Nach Betätigung des Ventils kann somit jede Schnellarretierung einzeln zur Demontage betätigt werden, nämlich durch Betätigung der Sperrbetätigung.

Je nach verwendetem System, also Hydraulik, Pneumatik oder Elektrik, umfasst die modulare Plattform eine entsprechende Verteilung, welche die Schnellarretierung mit der Steuerung verbindet. Bevorzugt wird dabei die jeweilige Sperrbetätigung mit der Steuerung verbunden.

Durch die vorgenannte Anordnung des jeweiligen Systems auf oder an der modularen Plattform ist diese fähig, autark entsperrt werden zu können. Energieversorgungen durch das Fahrzeug sind demnach zwar möglich, jedoch nicht notwendig.

Erfindungsgemäß kann die modulare Plattform derart gestaltet sein, dass die Plattform Verstauhilfen aufweist. Verstauhilfen können Fächer, teilweise mit Abdeckungen, Rahmen oder Befestigungselemente wie Ösen oder Bolzen beinhalten. Durch die Möglichkeit der Verstauhilfen können unterschiedliche Arten von Fahrzeugkomponenten auf der modularen Plattform aufgenommen und ggf. befestigt werden. Eine modulare Plattform kann dabei unterschiedliche Verstauhilfen beinhalten und es ist denkbar, für jeden Einsatzzweck unterschiedliche modulare Plattformen herzustellen, die entsprechende Verstauhilfen beinhalten. Diese können auch nur teilweise genutzt werden. Ungenutzte Verstauhilfen können frei bleiben und nehmen somit keine Fahrzeugkomponenten auf.

Weiterhin wird vorgeschlagen, dass die modulare Plattform zumindest teilweise auf Lochraster ausgeführt ist. Durch das Lochraster können unter der Plattform angeordnete, zu kühlende Teile des Fahrzeugs, insbesondere Triebwerke, mit Luft versorgt werden.

Weitere Merkmale ergeben sich aus den beigefügten Zeichnungen. Es zeigen:
- Figur 1A:: Eine erfindungsgemäße modulare Plattform in perspektivischer Ansicht;
- Figur 1B bis 1F:: Detailansichten erfindungsgemäßer Befestigungsmittel der modularen Plattform aus Figur 1A;
- Figur 2A bis 2C:: Komponenten einer zentralen Entriegelung der modularen Plattform;
- Figur 3A und 3B:: Steuerung der modularen Plattform in perspektivischer und detaillierter Ansicht;
- Figur 4:: Verteilung eines hydraulischen Systems der erfindungsgemäßen modularen Plattform.

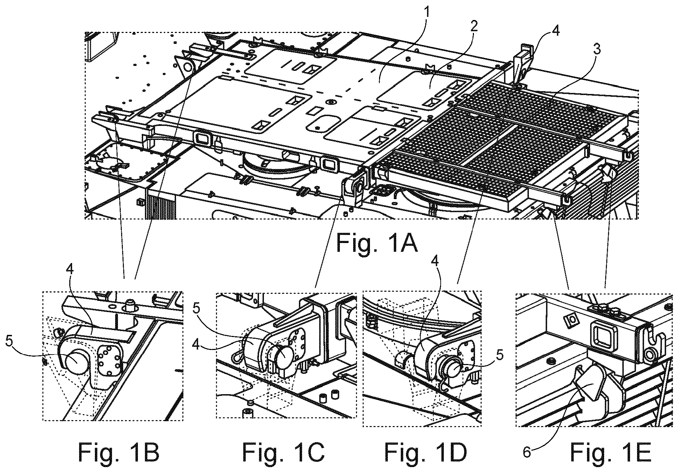

Figur 1A zeigt eine erfindungsgemäße modulare Plattform 1 in perspektivischer Darstellung. Dazu ist die modulare Plattform 1 an einem Fahrzeug derart angebracht, dass die Plattform 1 waagerecht auf dem Fahrzeug befestigt wird.

Die besagte modulare Plattform 1 besteht aus einem Teil, der flächig und eben ausgeführt ist und einem Teil, der aus einem Raster 3 ausgeführt ist.. Durch das Raster 3 können darunter liegende Teile des Fahrzeugs, insbesondere Triebwerke, mit Luft zu Kühlzwecken versorgt werden.

Der nicht als Raster ausgeführte Teil der Plattform 1 beinhaltet Verstauhilfen 2 in Form von Fächern oder weitere Befestigungshilfen wie Haken, Ösen oder Bolzen. Diese Verstauhilfen 2 können, wie gezeigt, durch Deckel verschlossen werden.

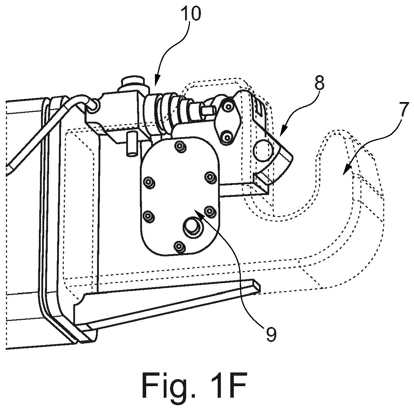

Erfindungsgemäß besitzt die modulare Plattform 1 mindestens zwei Schnellarretierungen 4. Diese Schnellarretierungen 4 werden in den weiteren Figuren 1B bis 1D sowie 1F detailliert dargestellt.

Figur 1E zeigt ein Befestigungsmittel, welches nicht als Schnellarretierung 4 ausgeführt ist. Vielmehr zeigt Figur 1E ein Befestigungsmittel, welches als Auflage ausgeführt ist.

So sind die Schnellarretierungen 4 derart gestaltet, dass sie einen Haken 7 aufweisen und dieser Haken 7 einen U-förmigen Innenbereich aufweist. In diesem U-förmigen Innenbereich können zylinderförmige Körper aufgenommen werden, wie beispielsweise die gezeigten Haltebolzen 5. Entsprechende zylinderförmige Körper können bereits am Fahrzeug vorhanden sein, aber auch eine einfache Nachrüstung ist denkbar. Dazu können an geeigneter Stelle am Fahrzeug die Körper über Befestigungen 6 am Fahrzeug angeordnet sein. Befestigungen 6 können durch Verschraubung oder Verschweißen lösbar oder starr mit dem Fahrzeug verbunden sein.

Um die erfindungsgemäße modulare Plattform 1 auf einem Fahrzeug anzubringen, reicht es aus, die Plattform 1 mit oder ohne montierte Fahrzeugkomponenten auf das Fahrzeug aufzusetzen. Durch die Schwerkraft wird dann die Plattform 1 durch die Schnellarretierungen 4 auf die entsprechenden zylinderförmigen Körper, hier Haltebolzen 5 aufgebracht. Die Schnellarretierungen 4 sind dazu so gestaltet, dass sie die Bewegung der Plattform in entgegengesetzter Montagerichtung, also zur Demontage sperren können.

Nach Figur 1F ist die entsprechende Schnellarretierung dazu derart gestaltet, dass eine Sperrklinke 8 vorgesehen ist, welche zumindest teilweise in den Innenbereich der Schnellarretierung hineinragen kann. Dazu ist die Sperrklinke 8 drehgelagert ausgeführt und kann so in den Innenbereich eingeschwenkt werden, dass bei einem im Haken 7 aufgenommenen Körper dieser in seiner Bewegung beschränkt wird und nicht mehr ohne Einwirken auf die Sperrklinke aus der Schnellarretierung heraus bewegt werden kann.

Beim Einbringen der Schnellarretierung auf einen zylinderförmigen Körper wird durch die Drehlagerung der Sperrklinke 8 diese beim Einbringen des zylinderförmigen Körpers in den Haken 7 weggeschwenkt, sodass die Montage auf den zylinderförmigen Körper ohne weiteres Einwirken auf die Sperrklinke gelingt.

Bevorzugt wird die Sperrklinke 8 mit einem Spannelement 9 beaufschlagt, wodurch eine Kraft die Sperrklinke 8 in den Innenbereich des Hakens 7 hineindrückt. Somit muss bei Montage der Plattform 1 durch die Schwerkraft der Plattform die Kraft des Spannelements 9 überwunden werden.

Weiterhin bevorzugt besitzt die Schnellarretierung 4 eine Sperrbetätigung 10, wodurch die Kraft des Spannelements 9 überwunden werden kann. Die Sperrklinke 8 kann somit durch die Sperrbetätigung 10 aus dem Innenbereich der Schnellarretierung 4 herausbewegt werden. Im vorliegenden Fall ist die Sperrbetätigung 10 als hydraulisches Element ausgeführt, wobei die Sperrbetätigung 10 hydraulisch angesteuert werden kann.

Als besonderer Vorteil der modularen Plattform 1 ist eine zentrale Steuerung 11 vorgesehen, welche alle Sperrbetätigungen 10 der Schnellarretierungen 4 der Plattform 1 ansteuern kann. Diese Steuerung 11 ist der Plattform 1 zugeordnet, sodass die Plattform 1 autark und ohne Funktion des Fahrzeugs arbeiten kann.

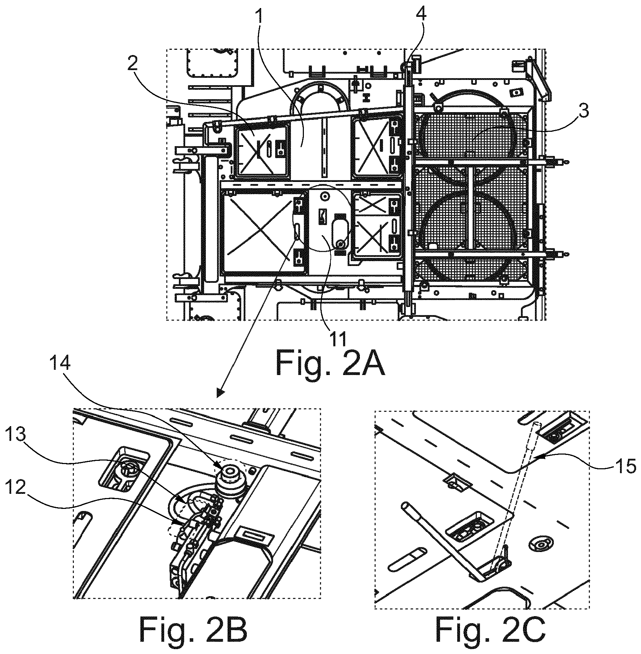

In Figur 2A ist eine entsprechende Steuerung 11 und die Lage auf der Plattform 1 gezeigt. Selbstverständlich ist die Lage auf der Plattform 1 beispielhaft. Die Steuerung 11 kann je nach Ausführung der modularen Plattform 1 an jeder Stelle der Plattform 1 angeordnet sein.

In Figur 2B ist der Steuerung 11 eine Pumpe 13 sowie ein Behälter 14 zugeordnet. Dies ist sinnvoll bei hydraulischen Systemen. Entsprechend abgeändert, kann die Steuerung 11 aber auch pneumatisch oder elektrisch fungieren.

Die Pumpe 13 sorgt dafür, dass der benötigte hydraulische Druck aufgebaut werden kann, und der Behälter 14 ist das Reservoir für die Hydraulikflüssigkeit. Hierdurch kann in einfacher Art und Weise Hydraulikflüssigkeit nachgefüllt werden, wenn benötigt.

Ebenfalls der Steuerung 11 zugehörig ist ein Ventil 12, über das eine Druckentlastung des hydraulischen Systems vorgenommen werden kann.

Figur 2C zeigt eine Entriegelung 15, über welche die Steuerung 11 aktiviert werden kann. Die Entriegelung 15 ist ebenfalls der Plattform 1 zugehörig, wobei sich hier empfiehlt, die Entriegelung 15 in der Nähe der Steuerung 11 anzuordnen.

Zur Demontage der modularen Plattform kann nun die Entriegelung 15 betätigt werden, welche die Steuerung 11 aktiviert. Über die Steuerung 11 und das hydraulische System werden dann die Sperrbetätigungen 10 der Schnellarretierungen 4 betätigt und die Sperrklinken 8 bewegt. Die modulare Plattform 1 ist nun frei und vom Fahrzeug abnehmbar.

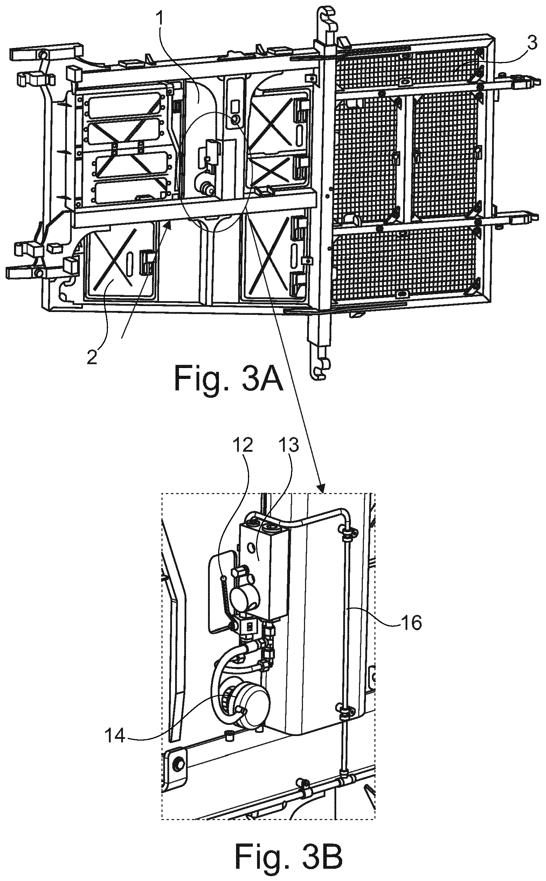

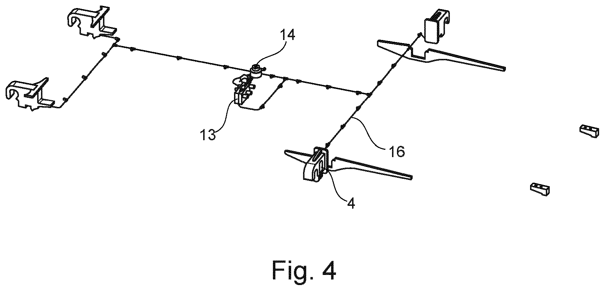

In Figur 3A und 3B wird für das hydraulischen System eine Verteilung 16 gezeigt, um die Steuerung 11 mit den Schnellarretierungen 4 zu verbinden. Eine solche Verteilung 16 wird in Figur 4 detailliert gezeigt. Hier ist zu erkennen, wie von der Pumpe 13 und dem Behälter 14 der Steuerung 11 eine Verteilung 16 zu den einzelnen Schnellarretierungen 4 geführt ist.

Wenn das System nicht als hydraulisches System, sondern als pneumatisches oder elektrisches System ausgeführt ist, ist eine entsprechende Verteilung vorzusehen.

Die vorliegende Erfindung ist nicht auf die vorgenannten Merkmale beschränkt. Vielmehr sind weitere Ausführungsformen denkbar. So ist beispielsweise eine Steuerung durch Bowdenzüge statt eines hydraulischen Systems denkbar. Es ist dann notwendig, die Verteilung als Seilzüge auszuführen. Die modulare Plattform selbst kann aus Metall oder Kunststoff gefertigt sein. Auch Hartpappe wäre denkbar. Zuletzt wäre es denkbar, bei einer elektrischen Verteilung der Plattform ein eigenes Energieaggregat zuzuordnen, damit die Plattform autark arbeiten kann.

### BEZUGSZEICHENLISTE

- 1.: Plattform
- 2.: Verstauhilfen
- 3.: Raster
- 4.: Schnellarretierung
- 5.: Haltebolzen
- 6.: Befestigung
- 7.: Haken
- 8.: Sperrklinke
- 9.: Spannelement
- 10.: Sperrbetätigung
- 11.: Steuerung
- 12.: Ventil
- 13.: Pumpe
- 14.: Behälter
- 15.: Entriegelung
- 16.: Verteilung

## Patentansprüche

1. Modulare Plattform (1) zur Aufnahme von Fahrzeugkomponenten,
mit Befestigungsmitteln zur Befestigung der Plattform (1) auf oder an einem Fahrzeug, **dadurch gekennzeichnet,**
**dass** mindestens zwei der Befestigungsmittel als Schnellarretierung (4) ausgeführt sind,
**dass** die Schnellarretierung einen Haken (7) und eine Sperrklinke (8) umfasst und der Haken einen U-förmigen Innenbereich aufweist,
**dass** der Haken (7) der Schnellarretierung so geformt ist, dass er im Innenbereich einen zylinderförmigen Körper, bspw. einen Haltebolzen (5) aufnehmen kann,
**dass** die Schnellarretierung (4) ein Spannelement (9) aufweist, welches die Sperrklinke (8) zumindest teilweise in den Innenbereich des Hakens (7) mittels einer Kraft überführen kann, und
**dass** die Schnellarretierung (4) derart angeordnet ist, dass bei Montage der modularen Plattform (1) durch die Befestigungsmittel mittels der Schwerkraft der Plattform (1) bei der Bewegung der zylinderförmigen Körper in den Innenbereich der Schnellarretierung hinein die Kraft der Sperrklinke (8) überwunden und somit die Sperrklinke (8) aus dem Innenbereich des Hakens (7) herausbewegt werden kann.

2. Modulare Plattform (1) nach Anspruch 1, **dadurch gekennzeichnet, dass** die Sperrklinke (8) drehgelagert ist, derart, dass die Sperrklinke teilweise in den Innenbereich des Hakens (7) hineinragen kann.

3. Modulare Plattform (1) nach einem der Ansprüche 1 oder 2, **dadurch gekennzeichnet, dass** die Sperrklinke (8) den aufgenommenen Körper in seiner Bewegungsfreiheit begrenzen kann.

4. Modulare Plattform (1) nach einem der Ansprüche 1 bis 3, **dadurch gekennzeichnet, dass** die Schnellarretierung eine Sperrbetätigung (10) umfasst, um die Sperrklinke (8) aus dem Innenbereich des Hakens (7) herauszubewegen.

5. Modulare Plattform (1) nach einem der Ansprüche 1 bis 4, **dadurch gekennzeichnet, dass** die Plattform (1) Verstauhilfen (2) aufweist.

6. Modulare Plattform (1) nach einem der Ansprüche 1 bis 5, **dadurch gekennzeichnet, dass** die Plattform (1) zumindest teilweise als Lochraster (3) ausgeführt ist.

7. Modulare Plattform (1) nach einem der Ansprüche 4 bis 6, **dadurch gekennzeichnet, dass** die Plattform (1) eine Steuerung (11) umfasst, welche die Betätigung aller Sperrbetätigungen (10) der Schnellarretierungen ausführen kann.

8. Modulare Plattform (1) nach Anspruch 7, **dadurch gekennzeichnet, dass** die Steuerung (11) elektrisch, pneumatisch oder hydraulisch ausgeführt ist.

9. Modulare Plattform (1) nach Anspruch 8, **dadurch gekennzeichnet, dass** die hydraulische Steuerung (11) eine Pumpe (13) und einen Behälter (14) für Hydraulikflüssigkeit beinhaltet.

10. Modulare Plattform (1) nach einem der Ansprüche 7 bis 9, **dadurch gekennzeichnet, dass** die Steuerung (11) ein Ventil (12) beinhaltet, zum Entlasten der Steuerung.

11. Modulare Plattform (1) nach einem der Ansprüche 7 bis 10, **dadurch gekennzeichnet, dass** die Plattform (1) eine Entriegelung (15) umfasst, welche die Steuerung (11) zur Betätigung der Sperrbetätigungen (10) veranlassen kann.

12. Modulare Plattform (1) nach einem der Ansprüche 7 bis 11, **dadurch gekennzeichnet, dass** die Plattform (1) eine Verteilung umfasst, welche die Schnellarretierungen mit der Steuerung (11) verbindet.

13. Modulare Plattform (1) nach einem der Ansprüche 1 bis 12, **dadurch gekennzeichnet, dass** die Befestigungsmittel teilweise als Auflagen ausgeführt sind.

14. Modulare Plattform (1) nach einem der Ansprüche 1 bis 13, **dadurch gekennzeichnet, dass** die Schnellarretierungen Notlösemittel umfassen, um die Plattform vom Fahrzeug zu lösen.

## Claims

1. Modular platform (1) for receiving vehicle components,
comprising fastening means for fastening the platform (1) on or to a vehicle, **characterized in**
**that** at least two of the fastening means are designed as quick-locking devices (4),
**that** the quick-locking device comprises a hook (7) and a pawl (8) and the hook (7) comprises a U-shaped inner area,
**that** the hook (7) of the quick-locking device is shaped in such a way that it can receive a cylindrical body, for example a retaining bolt (5), in the inner area,
**that** the quick-locking device (4) comprises a clamping element (9) which can transfer the pawl (8) at least partially into the inner area of the hook (7) by means of a force, and
**that** the quick-locking device (4) is arranged in such a way that, when the modular platform (1) is mounted by means of the fastening means, the force of the pawl (8) can be overcome by means of the gravitational force of the platform (1) when the cylindrical bodies are moved into the inner area of the quick-locking device, and thus the pawl (8) can be moved out of the inner area of the hook (7).

2. Modular platform (1) according to claim 1, **characterized in that** the pawl (8) is rotatably mounted such that the pawl (8) can partially protrude into the inner area of the hook (7).

3. Modular platform (1) according to one of claims 1 or 2, **characterized in that** the pawl (8) can limit the freedom of movement of the received body.

4. Modular platform (1) according to any one of claims 1 to 3, **characterized in that** the quick-locking device comprises a locking actuator (10) to move the pawl (8) out of the inner area of the hook (7).

5. Modular platform (1) according to one of claims 1 to 4, **characterized in that** the platform (1) has stowage aids (2).

6. Modular platform (1) according to one of claims 1 to 5, **characterized in that** the platform (1) is at least partially designed as a perforated grid (3).

7. Modular platform (1) according to any one of claims 4 to 6, **characterized in that** the platform (1) comprises a controller (11) capable of performing the actuation of all the locking actuators (10) of the quick-locking devices.

8. Modular platform (1) according to claim 7, **characterized in that** the controller (11) is electrical, pneumatic or hydraulic.

9. Modular platform (1) according to claim 8, **characterized in that** the hydraulic controller (11) includes a pump (13) and a reservoir (14) for hydraulic fluid.

10. Modular platform (1) according to any one of claims 7 to 9, **characterized in that** the controller (11) includes a valve (12) for unloading the controller (11).

11. Modular platform (1) according to any one of claims 7 to 10, **characterized in that** the platform (1) comprises an unlocking device (15) that can cause the controller (11) to actuate the locking actuators (10).

12. Modular platform (1) according to any one of claims 7 to 11, **characterized in that** the platform (1) comprises a distribution connecting the quick-locking devices to the control (11).

13. Modular platform (1) according to one of claims 1 to 12, **characterized in that** the fastening means are partially designed as supports.

14. Modular platform (1) according to any one of claims 1 to 13, **characterized in that** the quick-locking devices comprise emergency release means to release the platform from the vehicle.

## Revendications

1. Plate-forme modulaire (1) destinée à recevoir des composants de véhicule,
comprenant des moyens de fixation destinés à fixer la plate-forme (20) sur ou à un véhicule, **caractérisée**
**en ce qu'**au moins deux des moyens de fixation sont conçus en tant que dispositifs à verrouillage rapide (4),
**en ce que** le dispositif à verrouillage rapide comprend un crochet (7) et un cliquet (8) et le crochet (7) comprend une zone interne en forme de U,
**en ce que** le crochet (7) du dispositif à verrouillage rapide est formé de manière à pouvoir recevoir un corps cylindrique, par exemple un boulon de retenue (5), dans la zone interne,
**en ce que** le dispositif à verrouillage rapide (4) comprend un élément de serrage (9) qui peut transférer le cliquet (8) au moins partiellement dans la zone interne du crochet (7) au moyen d'une force, et
**en ce que** le dispositif à verrouillage rapide (4) est conçu de sorte que, lorsque la plate-forme modulaire (1) est montée au moyen des moyens de fixation, la force du cliquet (8) peut être surmontée au moyen de la force de gravité de la plate-forme (1) lorsque les corps cylindriques sont amenés dans la zone interne du dispositif à verrouillage rapide, et ainsi le cliquet (8) peut être déplacé hors de la zone interne du crochet (7).

2. Plate-forme modulaire (1) selon la revendication 1, **caractérisée en ce que** le cliquet (8) est monté pivotant de sorte que le cliquet (8) puisse partiellement faire saillie dans la zone interne du crochet (7).

3. Plate-forme modulaire (1) selon l'une des revendications 1 ou 2, **caractérisée en ce que** le cliquet (8) peut limiter la liberté de mouvement du corps reçu.

4. Plate-forme modulaire (1) selon l'une quelconque des revendications 1 à 3, **caractérisée en ce que** le dispositif à verrouillage rapide comprend un actionneur de verrouillage (10) pour déplacer le cliquet (8) hors de la zone interne du crochet (7).

5. Plate-forme modulaire (1) selon l'une des revendications 1 à 4, **caractérisée en ce que** la plate-forme (1) comporte des éléments d'aide à l'arrimage (2).

6. Plate-forme modulaire (1) selon l'une des revendications 1 à 5, **caractérisée en ce que** la plate-forme (1) est au moins partiellement conçue comme une grille perforée (3).

7. Plate-forme modulaire (1) selon l'une quelconque des revendications 4 à 6, **caractérisée en ce que** la plate-forme (1) comprend un dispositif de commande (11) permettant de mettre en oeuvre l'actionnement de tous les actionneurs de verrouillage (10) des dispositifs à verrouillage rapide.

8. Plate-forme modulaire (1) selon la revendication 7, **caractérisée en ce que** le dispositif de commande (11) est électrique, pneumatique ou hydraulique.

9. Plate-forme modulaire (1) selon la revendication 8, **caractérisée en ce que** le dispositif de commande hydraulique (11) comprend une pompe (13) et un réservoir (14) destiné à un fluide hydraulique.

10. Plate-forme modulaire (1) selon l'une quelconque des revendications 7 à 9, **caractérisée en ce que** le dispositif de commande (11) comprend un clapet (12) destiné à décharger le dispositif de commande (11).

11. Plate-forme modulaire (1) selon l'une quelconque des revendications 7 à 10, **caractérisée en ce que** la plate-forme (1) comprend un dispositif de déverrouillage (15) qui peut amener le dispositif de commande (11) à actionner les actionneurs de verrouillage (10).

12. Plate-forme modulaire (1) selon l'une quelconque des revendications 7 à 11, **caractérisée en ce que** la plate-forme (1) comprend une distribution raccordant les dispositifs à verrouillage rapide au dispositif de commande (11).

13. Plate-forme modulaire (1) selon l'une des revendications 1 à 12, **caractérisée en ce que** les moyens de fixation sont au moins partiellement conçus comme des supports.

14. Plate-forme modulaire (1) selon l'une quelconque des revendications 1 à 13, **caractérisée en ce que** les dispositifs à verrouillage rapide comprennent un moyen de libération d'urgence pour libérer la plate-forme du véhicule.
